(19) **Europäisches Patentamt**
**European Patent Office**
**Office européen des brevets**

(11) **EP 4 783 112 A1**

(12) # EUROPEAN PATENT APPLICATION

(43) Date of publication:
**29.07.2026 Bulletin 2026/31**

(21) Application number: **25461506.5**

(22) Date of filing: **23.01.2025**

(51) International Patent Classification (IPC):
***G06T 7/00*** (2017.01)

(52) Cooperative Patent Classification (CPC):
**G06T 7/0012;** G06T 2207/10088;
G06T 2207/20081; G06T 2207/20084;
G06T 2207/30016; G06T 2207/30096

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **HETALOX SPOLKA Z OGRANICZONA ODPOWIEDZIALNOSCIA**
**54-105 Wroclaw (PL)**

(72) Inventors:
• **KONOPCZYNSKI, Tomasz**
**54-105 Wroclaw (PL)**
• **KORBECKI, Adrian**
**55-093 Kielczow (PL)**

(74) Representative: **Bury & Bury**
**ul. Przyczolkowa 124**
**02-968 Warszawa (PL)**

(54) **A METHOD, COMPUTER PROGRAM PRODUCT AND SYSTEM OF DETECTING FOCAL ABNORMALITIES AND METHOD OF TRAINING MACHINE LEARNING MODEL**

(57) A computer implemented method of detecting and/or monitoring brain focal abnormalities correlated with a progression of neurological diseases comprising feature calculation (350) by applying at least one geometric feature filter **(351, 352, 353, 354)** to at least one sequence to obtain at least one feature map concatenation (360) of the at least one sequence of the normalized MRI image and the at least one feature map to obtain input for the machine learning model and processing (370) of the input with a machine learning model, in encoder-decoder architecture, trained to return probability map corresponding to the at least one brain structure with use of real sequences and synthetic sequences.

The invention further concerns computer program product, computer system and method of training.

Fig. 4

**Description**

**Field of the invention**

The invention concerns a method, computer program product and system of detecting focal abnormalities in brain tissue and method of training machine learning model.

**State of the art**

Computer aided analysis of medical images has become an important element of common diagnostic methods. In multiple applications identification of focal abnormalities is a key element of determining patient condition and/or disease. Identification of focal abnormalities can occur either subjectively or with the help of semi- or fully-automated software. Use of semi- or fully-automated software for finding possibly pathological regions of interest (ROIs) represented in the scan is commonly referred to as computer aided detection (CAD or CADe). Use of artificial neural networks trained for detection in many applications gives opportunity to improve sensitivity and specificity of lesions detection. Lesions are examples of focal abnormalities which are broader term.

Automated lesion detection, segmentation, and longitudinal identification method is known from EP3629898A1.

Generally artificial intelligence, artificial neural networks and machine learning models are extremely useful in brain image analysis. The term machine learning model is understood as a computer implemented method that learns patterns from data to make predictions or decisions. It processes inputs (features) using learned parameters (e.g., weights) and optimizes an objective cost function via a training algorithm. During training models can be supervised with a use of labeled data, which are referred to as annotations or annotation map.

Method and system for the automatic segmentation of hyperintensities of white matter in brain magnetic resonance images is known from ES2813777. The method involves providing a magnetic resonance brain image to a set of trained convolutional neural networks (CNN); determining, for each of the CNNs and for each voxel, a probability that the given voxel corresponds to a pathological hyperintensity; average all the probabilities determined for each voxel; comparing the averaged probabilities for each voxel with a threshold; generate an image mask with the voxels that exceed the threshold.

DE102020200081 discloses a computer system for using radiological image data, between two temporally successive examinations of the same patient, to obtain quantitative information of the temporal course about a lesion by means of two different segmentation algorithms applied to temporally successive recordings which segment the lesions.

Magnetic resonance imaging (MRI) is a medical imaging technique used in radiology. MRI scanners use strong magnetic fields, magnetic field gradients, and radiofrequency waves to form images of the organs in the body. MRI can differentiate between white matter and grey matter and can also be used to diagnose aneurysms and tumors. Because MRI does not use x-rays or other radiation, it is the imaging modality of choice when precise delineation of tissues or frequent imaging is required for diagnosis or therapy, especially in the brain. MRI is useful in analysing brain structures which include every normal and abnormal volumes in the brain, for example blood vessels and focal abnormalities.

An MRI pulse sequence in magnetic resonance imaging is a particular setting of pulse sequences and pulsed field gradients, resulting in a particular image characteristic, called "weighting". MRI image obtained with a particular MRI setting is often just referred to as an MRI "sequence". MRI sequences typically used involve Fluid Attenuated Inversion Recovery (FLAIR), T1-weighted (T1W), T2-weighted (T2W), Susceptibility Weighted Imaging (SWI), Time-of-Flight (TOF), Double Inversion Recovery (DIR) and others. A multiparametric MRI image is a combination of two or more sequences, and/or including other specialized MRI configurations such as spectroscopy.

It is noted that focal abnormalities, for example white matter hyperintensities (WMH) in FLAIR, are easier to observe in some sequence than in the others. It has been observed that this white matter damage is correlated with a progression of neurodegenerative and demyelinating diseases.

Amyloid-related imaging abnormalities (ARIA) are potential side effects associated with certain anti-amyloid beta monoclonal antibody treatments for Alzheimer's disease. These treatments include, but are not limited to: Aducanumab, Lecanemab, Donanemab. As SWI is generally better than GRE (Gradient-Recalled Echo) for applications requiring high sensitivity to small or subtle susceptibility effects, the machine learning algorithm is trained on SWI to produce probability maps of microbleeds on the SWI volume.

A TOF type sequences are used for aneurysm analysis because they provides a non-contrast method to visualize blood vessels, making it ideal for identifying aneurysms. Its sensitivity to flow-related signal intensity helps detect aneurysms without requiring contrast agents.

A problem with automatic segmentation of MRI images is that signal intensity and contrast in MRI images depends on the sequence characteristics such as density or permittivity or other physical quality. MRI images visualize the shape of particular structures. Various sequences are particularly suited for detection of specific pathology, enabling the diagnosis of particular disease. Accordingly, training artificial neural networks for segmentation of MRI images is particularly challenging. Artificial neural networks trained with images according to one sequence fail to operate with images according to other sequences or multiparametric MRI images. Artificial neural networks trained with multiparametric images fail to work with just one sequence. Additionally artificial neural networks tend to overfit to particular equipment and fail to operate with images within the same sequence MRI images but obtained with different equipment.

Additionally MRI examination takes time and requires the patient to stay motionless. It is often difficult therefore it often happens that one of selected sequences is not acquired or is severely distorted.

Furthermore, particular MRI images may be recorded in a manner making them difficult to process with machine learning model.

One of the problems is non-uniform image intensity resulting from differences in image intensity across the brain. It can make it difficult to distinguish between focal abnormalities and surrounding tissue.

Another problem is related to complex structures of brain. This complexity has a consequence in that segmenting (identifying) focal abnormalities from surrounding brain tissue is challenging due to the complexity of brain anatomy. Focal abnormalities can have different shapes, sizes, locations, and signal intensities, which further complicates their detection and classification as they resemble some of normal brain structure elements. Focal abnormalities often exhibit similar signal intensity on MRI scans as arterial or other blood vessels, making it difficult to distinguish them accurately.

Further problem is related to signal to noise ratio (SNR). MRI scans can be affected by various types of noise and artifacts, such as motion, magnetic susceptibility, and chemical shift. Furthermore, early detection is important for patient treatment. Hence, it is desirable to detect focal abnormalities when they are small. Unfortunately, small focal abnormalities can easily be overlooked with presence of noise and artifacts.

### Problem to be solved

It is an object of the invention to solve the above problem and provide a reliable method of detection of focal abnormalities, segmentation of focal abnormalities, classification of focal abnormalities and/or longitudinal tracking of focal abnormalities from MRI sequences of a brain.

### Summary of the invention

A computer implemented method according to the invention concerns detecting and/or monitoring brain focal abnormalities correlated with a progression of neurological diseases. The method comprises a step of receiving at least one MRI image comprising at least one sequence in at least one predefined format. Further the method comprises a step of applying at least a first brain analysis pipeline. The brain analysis pipeline comprises normalization of the at least one MRI image, verification of the at least one MRI image to determine if it comprises all required sequences, feature calculation by applying at least one geometric feature filter to at least one sequence to obtain at least one feature map, concatenation of the at least one sequence of the normalized MRI image and the at least one feature map to obtain input for the machine learning model and processing of the input with a machine learning model. The machine learning model has an encoder-decoder architecture and is trained to return probability map corresponding to the at least one brain structure with use of real sequences and synthetic sequences. In the first brain analysis pipeline, the machine learning model is trained to detect brain structure which is focal abnormality of a first type. Finally the method comprises a step of outputting by processing at least one probability map into focal abnormality information. Use of probability maps obtained from MRI images taken previously allow longitudinal observation of focal abnormalities i.e. monitoring. Also use of probability maps allow objective measuring their size. Feature maps have size of the sequence and represent result of applying geometric feature filter. Encoder-decoder is often referred to as UNet-like.

Advantageously, the method further comprises a step of applying a second brain analysis pipeline comprising processing of the input with a machine learning model trained to return a probability map of at least one brain structure other than focal abnormalities, and the step of outputting includes merging the result of processing with the first and the second step machine learning model processing.

Advantageously, the method further comprises a step of applying a third brain analysis pipeline comprising processing of the input with a machine learning model trained to return a probability map of a focal abnormality type other than the first type. Further analysis pipeline may also be used.

Advantageously, at least one synthetic sequence is generated in generation step if verification step outputs information that at least one required sequence is not present in the MRI image. During inference the synthetic sequences allow using incomplete MRI images. It is particularly important in longitudinal observations as it allows re-using MRI images taken for different purpose and thus enable and increase frequency of monitoring. The ability to create missing synthetic sequences allows for using specialized machine learning models that require specific sequences on an input, while at the same time providing an additional insight for a medical expert. For instance, when analysing white matter hyperintensities (WMHs) in the brain, it is advised to use T1-weighted (T1W), FLAIR, and DIR sequences because each of these imaging modalities provides complementary information that enhances the detection, characterization, and delineation of WMHs.

Advantageously, the synthetic sequence is generated using a generative machine learning model.

Advantageously, the generative machine learning model is a diffusion model or autoregressive image generating model

Advantageously, the input of the processing step comprises at least two sequences and the feature calculation step is preceded with registration step (330) in which all sequences are aligned.

Computer program product according to the invention comprises a set of instructions which, when run on a computing environment cause execution of the method according to the invention.

A computer system according to the invention comprises a computing environment adapted to execute a method according to any of claims 1-6.

A method of training of a machine learning model to process a concatenation of at least one MRI sequence and at least one filtered image into a probability map corresponding to a brain structure, according to the invention comprises a step of receiving MRI images comprising a predefined set of sequences, a step of normalization of the MRI images, a step of retrieving at least one annotation for at least one sequence in each MRI image, wherein the at least one annotation comprises representation of the brain structure, a step of preparing a set of training data comprising training elements. Training elements are obtained by: adding annotations to aligned sequences in the MRI images, and setting up database having elements comprising MRI images with annotations, generating synthetic sequences, adding feature maps, corresponding to application of particular feature filters, augmentation by adding distortions to at least some of sequences, and finally by concatenation of sequences, synthetic sequences, feature maps, distorted sequences and annotations to obtain training element. The method further comprises a step of initializing the trained model a step of processing the training data through the trained model and a training loop. The training loop comprises a step of processing sequences with augmentation form the training data element through the model being trained, a step of computing at least one cost function over the probability map returned by the model being trained and the at least one annotation from the same training data element and a step of modifying the model being trained according to the computed cost function. Training loop is repeated until reaching a stop condition.

Advantageously, the step of receiving comprises generation of artificial synthetic sequences not present in the MRI images.

Advantageously, the augmentation comprises generation of at least one synthetic sequence with at least one distortion selected from a group comprising addition of noise, subjecting sequence to geometric transformation, subjecting sequence to N4 bias field.

Advantageously, the brain structure is a focal abnormality correlated to aneurysm or microbleeds and the filter is selected from a group of Hessian-based ridge operators. This kind of filter proved to be highly effective in enhancing training and inference of the machine learning model to model focal changes in proximity of vessels. Hessian based ridge operators are highly suited to emphasizing brain structures being vessels and hence make it less likely for the machine learning model to confuse blood vessel as focal abnormality.

Advantageously, the machine learning model for generating synthetic sequences is a diffusion model or autoregressive image generating model. Other legacy models such as Generative Adversarial Network (GAN), Variational AutoEncoder (VAE), Gaussian Mixture Model (GMM) are also applicable but stable diffusion and autoregressive image generating models are more precise. The autoregressive image generating model without vector quantization is additionally faster and more energy efficient.

Advantageously, wherein the machine learning model for generating synthetic sequences is fed with data selected from a group including: noise, annotations and MRI sequences.

Thanks to using the method according to the invention the progress of potential pathologies in patient's brain can be followed using MRI scans taken with different facilities and with different devices. Moreover, the method enables using different sequences in subsequent examinations thus enabling re-using the images taken in different diagnostic processes.

Use of synthetic data for training helps to solve the problem of overfitting. Thanks to augmenting the training set with synthetic data using generative models it is possible to make machine learning models more robust towards different distributions of MRI images caused by different MRI machine manufacturers, or different MRI settings, or even different sequences. It is especially a needed feature, when two examinations from two different MRI machines are to be analysed.

Thanks to augmenting data with synthetic focal abnormalities (both large and small) and synthetic vessels it is possible to make a machine learning model more robust towards detecting small focal abnormalities and differentiating them better from vascular objects.

Synthetic sequences generation during inference i.e. using the method according to the invention to detect and/or monitor the focal abnormalities in brain allows for using specialized machine learning models that require specific sequences on an input, while at the same time providing an additional insight for a medical expert. For instance, when analysing white matter hyperintensities (WMHs) in the brain, it is advised to use T1-weighted (T1W), FLAIR, and DIR sequences because each of these imaging modalities provides complementary information that enhances the detection, characterization, and delineation of WMHs. Preprocessed synthetic sequences further enable machine learning model to process images with non-uniform intensity.

Use of geometric feature filters enable training machine learning model to process to return probability maps of focal abnormalities and tell them apart from similar and complex brain structures.

Combination of vesselness ridge operators and structure tensors proved to be highly effective. Vesselness ridge operator and a 3D structure tensor (providing energy, coherence, and orientation) enhances MRI analysis by capturing complementary geometric features. The vesselness operator highlights tubular structures like blood vessels, while the structure tensor emphasizes local intensity patterns and orientation. Concatenating these features with the original MRI provides models with detailed vessel-specific and geometric information, improving accuracy in distinguishing small lesions from vessels and reducing false positives.

**Description of drawings**

The invention has been described below in detail, with reference to the following figures

Fig. 1 showing a flow chart of the method of detecting and monitoring brain focal abnormalities according to the embodiment of the present invention with three analysis pipelines,
Fig. 2 illustrates in step by step manner process of analysis with the method of detecting and monitoring brain focal abnormalities according to the same embodiment of the present invention with three analysis pipelines,
Fig. 3 shows an exemplary report,
Fig. 4 illustrates in step by step manner process of analysis with the method of detecting and monitoring brain focal abnormalities according to another embodiment of the present invention with just one analysis pipeline,
Fig. 5 showing a flowchart of training method according to embodiment of the present invention.

**Embodiments of the invention**

An embodiment of the method according to the invention is described below as it is realized on personal computers with AMD Ryzen 7 5700G, 128 GB of RAM, and NVIDIA GeForce RTX 3090 and 2 TB of solid-space disk. This combination is sufficient to obtain an embodiment of the system according to the invention although stronger setups are recommended.

The method according to the embodiment of the invention is for detecting and/or monitoring brain focal abnormalities correlated with a progression of neurological diseases, especially neurodegenerative and demyelinating diseases.

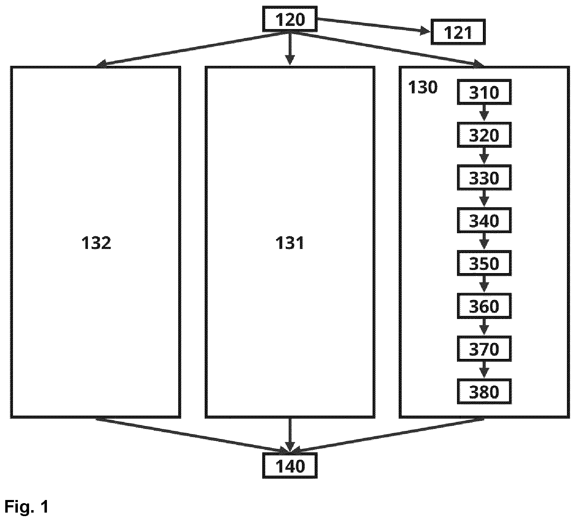

The method is applicable for successive examinations of the same patient and following the progress of potential lesions in time. The general flow chart is shown in Fig. 1.

In the step of receiving **120** at least one MRI image is obtained either directly from MRI device or via computer network or from a carrier. If only one MRI image is obtained then the method is applicable for detecting and evaluation of the focal abnormalities. If at least two MRI images taken at different times are provided then the method is also applicable for tracking progress of the focal abnormalities. Notably the method is not prone to common errors resulting from machine learning processing of MRI images taken with different machines.

Optionally sequences are subjected to quality control step 121. In this step it is verified if sequences have all expected slices and if volumetric data agree with MRI image header.

The MRI image comprises at least one sequence in at least one predefined format. Typically processed MRI image comprise two sequences: FLAIR and T1W. The method however, is applicable also for a large set including: FLAIR, T1W, T2W, SWI, TOF, DIR or more, or just one sequence. In particular, a single FLAIR sequence comprises information that can be used to generate other sequence or sequences. The present embodiment will be discussed with reference to MRI image comprising two sequences: FLAIR and T1W.

In this example a method according to an embodiment of the invention is adapted to detect three types of brain structure: microbleeds focal abnormalities, WMH lesions focal abnormalities, and brain parcellations.

The method is fed with a MRI image having three sequences SWI, T1W, FLAIR.

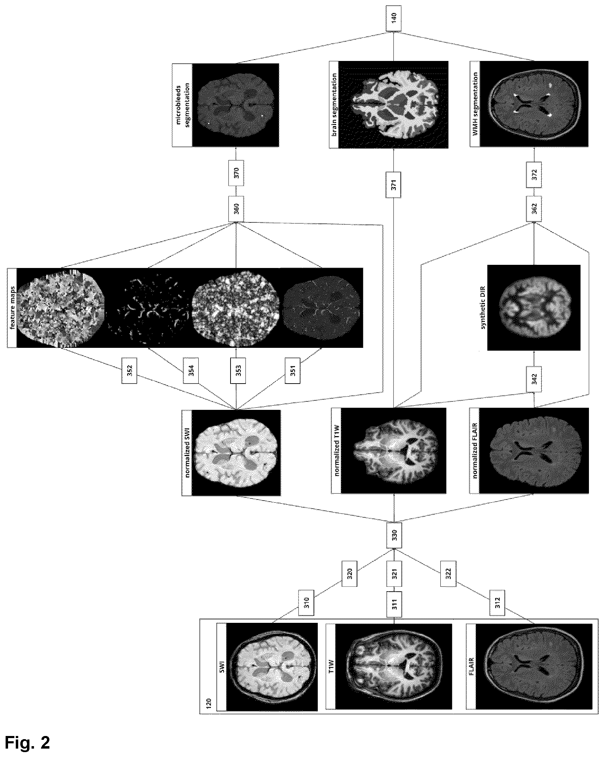

The MRI image is subjected to three brain analysis pipelines **130, 131, 132.** Each pipeline **130, 131, 132** results in a probability map. The process of analysis is described below with reference to Fig. 1 and Fig. 2.

The first brain analysis pipeline **130** results in probability map of microbleeds.

The second brain analysis pipeline **131** results in a probability map corresponding to the brain structures - this shows possible brain atrophies.

The third brain analysis pipeline **132** results in a probability map of WMH.

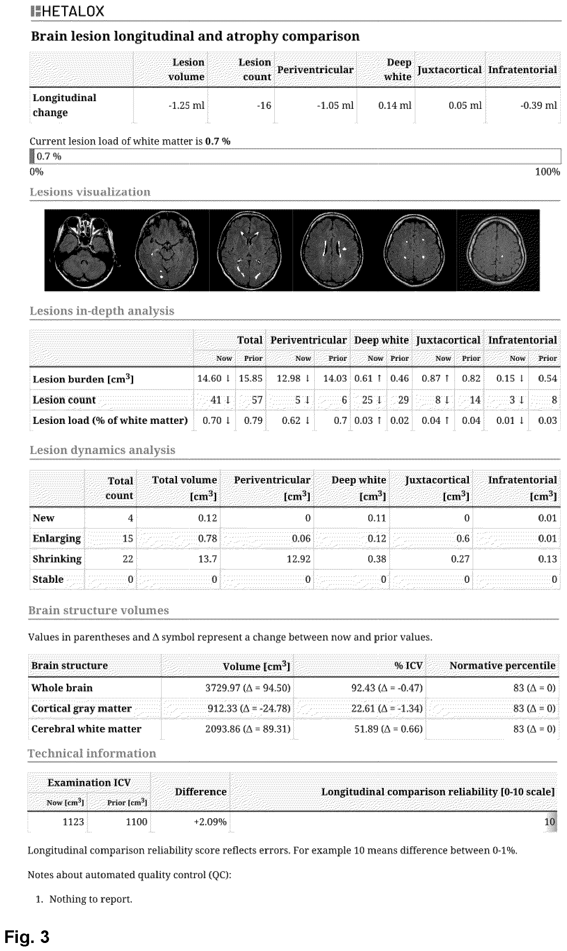

In the step of outputting **140** the probability maps are processed into focal abnormality information. When the method is executed periodically it allows longitudinal observation of brain structures and focal abnormalities. Then the optional report concerns not only present but also previous probability maps. The optional report includes patient data, brain images with marked probability maps, as well as volumes of WMH, number and volume of microbleeds and comparisons with previous results. Exemplary report is shown in Fig. 3. In this embodiment the report includes longitudinal data i.e. includes comparison of the results with previous data. The report provides quantitative information about focal abnormalities which are easily measurable from probability maps. Therefore the longitudinal report enables comparing the current and previous data objectively thus enabling objective observation of the development of the focal abnormalities, reducing impact of subjective or emotional perception.

In the first brain analysis pipeline **130** all three sequences are normalized in the step of normalization **310**. In the first step of machine learning model processing **130** the MRI image is first normalized **310**. The normalization may be model specific. In this embodiment for this model the normalization includes subjecting sequences to: resampling to cubic voxel having size of 0.5mm$^3$, N4 bias correction, signal clipping by discarding the bottom 1% and the top 1% of voxel intensities, scaling, and masking by skull stripping.

After normalization **310** the MRI image is subjected to verification **320**. As in the first brain analysis pipeline only SWI sequence is required, in the verification 320 step it is determined if all sequences required for the first analysis pipeline are present, therefore the generation step **340** will not be executed. If the sequence is missing then it may be signaled and the image may be marked as unusable. Alternatively the missing sequence may be generated using another sequence or other sequences.

Notably, in case of missing SWI sequence, but under presence of GRE, the ML model can be used on a synthetically generated SWI from GRE in the generation step 340.

Step of registration **330** is common for all three brain analysis pipelines. Registration aligns sequences to a common spatial coordinate system for comparison or analysis. For this task The Advanced Normalization Tools (ANTs) can be used. (Tustison, N.J., Cook, P.A., Holbrook, A.J. et al. The ANTsX ecosystem for quantitative biological and medical imaging. Sci Rep 11, 9068 (2021). https://doi.org/10.1 038/s41598-021-87564-6)

Then in the first analysis pipeline feature calculation step **350** is executed. This step involves subjecting the SWI sequence to four spatial filters: vesselness filter **351,** orientation filter **352,** coherence filter **353,** energy filter **354.**

The process of applying filters involves using a three dimensional Structure tensor calculated according to a teachings of Püspöki, Z., Storath, M., Sage, D., Unser, M. (2016). Transforms and Operators for Directional Bioimage Analysis: A Survey. In: De Vos, W., Munck, S., Timmermans, JP. (eds) Focus on Bio-Image Informatics. Advances in Anatomy, Embryology and Cell Biology, vol 219. Springer, Cham. https://doi.org/10.1007/978-3-319-28549-8_3, extended to three dimensional volumes.

For a 3D image I defined as:

$$I(\mathbf{x}), \mathbf{x} = (x, y, z) \in \mathbb{R}^3$$

,

the structure tensor $J$ for a processing 3D image $I(\mathbf{x})$ at position $\mathbf{x_0}$ is defined as:

$$J(\mathbf{x}_0) \int w(\mathbf{x} - \mathbf{x}_0)(\nabla I(\mathbf{x}))\nabla^T I(\mathbf{x}) dx dy dz$$

.

where $w$ is a nonnegative isotropic observation window centered at $\mathbf{x_0}$. A Gaussian window function is used in this embodiment. The structure tensor J can be written as

$$J = \begin{bmatrix} \langle I_x^2 \rangle & \langle I_x I_y \rangle & \langle I_x I_z \rangle \\ \langle I_x I_y \rangle & \langle I_y^2 \rangle & \langle I_y I_z \rangle \\ \langle I_x I_z \rangle & \langle I_y I_z \rangle & \langle I_z^2 \rangle \end{bmatrix}$$

Where $I_x, I_y, I_z$ are the partial derivatives of the image I(x) along the x, *y,* and z-axes.

From the 3D structure tensor J, eigenvalues ($\lambda_1 >= \lambda_2 >= \lambda_3$) and eigenvectors ($v_1$, V2, vs) are computed.

Application of the energy filter **354** to the sequence consists in generating an image of the size of the sequence in which every voxel is replaced with an energy value computed as E= $\lambda_1 + \lambda_2 + \lambda_3$.

Application of coherence or linearity (coherence filter **353**) to the sequence consists in generating an image of the size of the sequence in which every voxel is replaced with a coherence value $C = (\lambda_1 - \lambda_2) / (\lambda_1 + \lambda_2 + \lambda_3)$.

Application of orientation filter **352** to the sequence consists in generating an image of the size of the sequence in which every voxel is replaced value which represents the dominant direction of the structure and is derived from the eigenvector v1, corresponding to the largest eigenvalue $\lambda 1$.

Other filters applicable in training and using machine learning models to detect focal abnormalities and brain structures include: planarity filter based value $P = (\lambda_2 - \lambda_3) / (\lambda_1 + \lambda_2 + \lambda_3)$, isotropy filter based on value $I = \lambda_3 / \lambda_1$, azimuthal angle or polar angle filter.

Vesselness filter **351** applied in this embodiment is Jerman filter known from T. Jerman, F. Pernus, B. Likar, Z. Spiclin, "Enhancement of Vascular Structures in 3D and 2D Angiographic Images", IEEE Transactions on Medical Imaging, 35(9), p. 2107-2118 (2016), doi: 10.1109/TMI.2016.2550102.

In other embodiments of the invention various other vesselnes feature filters may be used, including in particular other Hessian-based ridge operators e.g. known from:

- Frangi, A.F., Niessen, W.J., Vincken, K.L., Viergever, M.A. (1998). Multiscale vessel enhancement filtering. In: Wells, W.M., Colchester, A., Delp, S. (eds) Medical Image Computing and Computer-Assisted Intervention - MICCAI'98. MICCAI 1998. Lecture Notes in Computer Science, vol 1496. Springer, Berlin, Heidelberg. https://doi.org/10.1007/BFb0056195;
- Meijering, E., Jacob, M., Sarria, J. C., Steiner, P., Hirling, H., Unser, M. (2004). Design and validation of a tool for neurite tracing and analysis in fluorescence microscopy images. Cytometry Part A, 58(2), 167-176. DOI:10.1002/cyto.a.20022
- Sato, Y., Nakajima, S., Shiraga, N., Atsumi, H., Yoshida, S., Koller, T., Kikinis, R. (1998). Three-dimensional multiscale line filter for segmentation and visualization of curvilinear structures in medical images. Medical image analysis, 2(2), 143-168. DOI:10.1016/S1361-8415(98)80009-1.

Hessian-based vesselness filters and structure tensors enhance microbleeds analysis from SWI in ARIA by distinguishing microbleeds (spherical, isotropic) from blood vessels (tubular, anisotropic).

The concatenation step **360** of the first brain analysis pipeline **130** involves connecting SWI sequence and 3D images being results of all four filters into an input for the machine learning model.

In the step **370** of processing a machine learning model trained to receive an input comprising SWI sequence and four results of filtration to output probability map of microbleeds is applied to the input prepared in the step of concatenation 360. The result of this step is the probability map of microbleeds.

The applied machine learning model has been trained with a use of synthetic volumes are generated from annotation maps of parcels from T1W, annotation maps of blood vessels from SWI and annotation maps of both randomly generated lesions and lesions from FLAIR. This significantly reduced overfit.

Combining a vesselness ridge (e.g. Hessian) operator and the 3D structure tensor filters, especially ones providing energy, coherence, and orientation enhances MRI analysis by capturing complementary geometric features. The vesselness operator highlights tubular structures like blood vessels, while the structure tensor emphasizes local intensity patterns and orientation. Concatenating these features with the original MRI provides models with detailed vessel-specific and geometric information, improving accuracy in distinguishing small lesions from vessels and reducing false positives.

The second brain analysis pipeline **131** requires only a sequence T1W. Therefore step of verification **321** indicates that the MRI image comprises all required sequences and there is no need to generate it in the step of generation 341. The second pipeline requires no filtering step **351,** hence there is no need to concatenate **360,** but only processing **371** with machine learning mode. The machine learning model is trained to output probability map of brain structures.

The third brain analysis pipeline **132** uses normalized and registered sequences obtained in the first pipeline. However, the third brain analysis pipeline does not require SWI but rather requires DIR. DIR is not available which is detected in verification step **322.** Therefore step of generation **342** is executed to generate synthetic DIR sequence.

In this embodiment the step of generation of required synthetic sequence involves using normalized T1W sequence and normalized FLAIR sequence as input of Stable Diffusion generating model trained to generate synthetic DIR sequences.

In this embodiment, a Stable Diffusion model for generating missing sequences has been trained using Sparsified Training (Pemberton, H.G., Wu, J., Kommers, I. et al. Multi-class glioma segmentation on real-world data with missing MRI sequences: comparison of three deep learning algorithms. Sci Rep 13, 18911 (2023), https://doi.org/10.1038/s41598-023-44794-0). The inventors noted however that other machine learning models are also applicable. Stable diffusion generates more realistic synthetic sequences comparing to legacy techniques such as Generative Adversarial Network (GAN), Variational AutoEncoder (VAE), Gaussian Mixture Model (GMM).

Alternatively one of the following can be applied:

- Autoregressive image generation model e.g. according to "Autoregressive image generation using residual quantization." Proceedings of the IEEE/CVF Conference on Computer Vision and Pattern Recognition. 2022. It generates more realistic synthetic sequences comparing to legacy techniques such as GAN, VAE, GMM.
- Autoregressive Image Generation model without Vector Quantization - which generates more realistic synthetic sequences comparing to legacy techniques such as GAN, VAE, GMM and further proved to be fast and energy efficient. Autoregressive Image Generation without Vector Quantization by, Tianhong Li, Yonglong Tian, He Li, Mingyang Deng, Kaiming He, https://doi.org/10.48550/arXiv.2406.11838,
- Other legacy models: GAN, VAE, GMM are also applicable.

In the step of concatenation **362** the normalized T1W, the normalized FLAIR and synthetic DIR are connected to form an input for machine learning model trained to return probability ma of WMH. In the step of processing **372** the machine learning model returns a probability map of WMH.

Use of machine learning model trained with use of synthetic generated from annotation maps of parcels from T1W, and annotation maps of both randomly generated lesions and lesions from FLAIR allowed to significantly reduce the overfit.

When an MRI image is processed with all three pipelines three probability maps are available for outputting focal abnormality information including visual and textual measures of processing.

For longitudinal monitoring a result of processing of previous imaging is required. Then the previous and present probability maps are registered together and a longitudinal report is outputted.

It is noted that the above example is not meant to limit but rather to exemplify the scope of the invention which is defined by the claims. Significant improvement with respect to the prior art has been obtained with only one brain analysis pipeline. Use of the geometric filters corresponding to particular focal abnormalities seem to be the main contributing factor. On the other hand, use of multiple brain analysis pipelines provides further advantage.

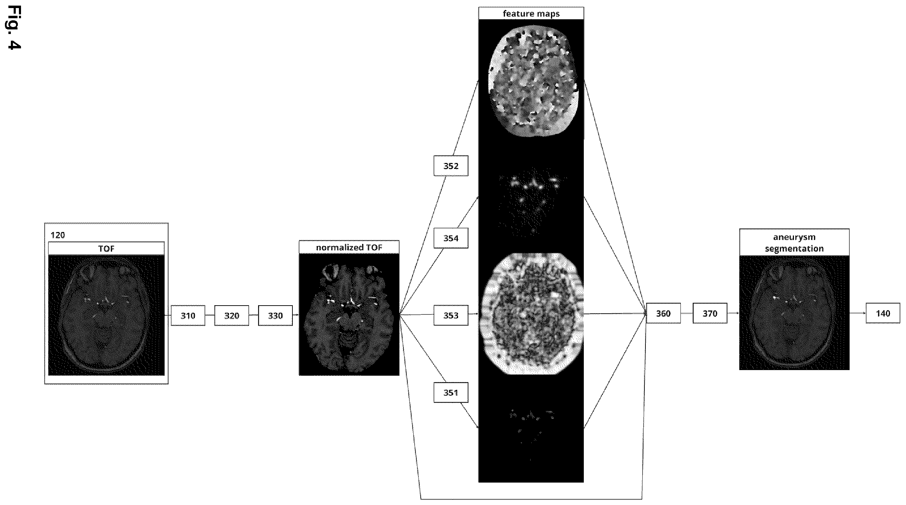

An embodiment of single pipeline processing is presented in Fig. 4 showing processing of an MRI image having only one sequence: TOF. TOF (Time-of-Flight) is used for aneurysm analysis because it provides a non-contrast method to visualize blood flow, making it ideal for identifying aneurysms. Its sensitivity to flow-related signal intensity helps detect aneurysms without requiring contrast agents.

Firstly the TOF sequence is subjected to normalization **310**. In this embodiment for this model the normalization includes subjecting sequences to: resampling to cubic voxel having size of $0.5mm^3$, N4 bias correction, signal clipping by discarding the bottom 1% and the top 1% of voxel intensities, scaling, and masking by skull stripping.

After normalization **310** the sequence is subjected to verification **320** - no additional sequences are required therefore there is no need for generation **340**. If the sequence TOF was missing in the MRI image it could be generated from T1W+C (contrast-enhanced) which is often available. In this case a synthetic TOF sequence may be generated from T1W+C.

As the only one sequence is processed there is no need for registration **330** either. The feature calculation step **350** includes filtration with the same three feature orientation filters discussed above: vesselness filter **351,** orientation filter **352,** coherence filter **353,** energy filter **354.**

In the concatenation step TOF sequence and 3D feature maps outputted by all four filters are concatenated into an input for the machine learning model. In the step **370** of processing a machine learning model trained to receive an input comprising TOF sequence and four feature maps to output probability map of microbleeds is applied to the input prepared in the step of concatenation **360**. The result of this step is the probability map of aneurysm segmentation. In the step of outputting **140** this probability map is processed into focal abnormality information.

Use of a U-Net-like CNN architecture, so called Encoder-Decoder Architecture is important for reliable recognition of probability maps of the brain structure. Encoder-decoder architecture allows for effective capture of global context and fine structural details, while skip connections ensure the preservation of small yet critical features, such as vessels and lesions. Its capability for voxel-wise segmentation, handling multiscale structures, and integrating complementary features like vesselness and structure tensor outputs makes it a robust and precise solution for distinguishing vessels from small focal abnormalities in MRI data.

UNETR and Swin-UNETR architecture were top performing among tested ones. A UNETR architecture, which can be used interchangeably, outperforms U-Net CNNs for some tasks due to its transformer-based architecture. It captures global context and long-range dependencies better than U-Net's localized convolutions. Swin-UNETR improves upon UNETR by using Swin Transformers, which combine hierarchical multiscale feature extraction with efficient shifted window attention. This allows for better contextual understanding, fine detail preservation, and reduced computational complexity, making it ideal for distinguishing vessels from small focal abnormalities in MRI data. Swin UNETR applied in embodiment of the invention was implemented according to Hatamizadeh, A., Nath, V., Tang, Y., Yang, D., Roth, H.R., Xu, D. (2022). Swin UNETR: Swin Transformers for Semantic Segmentation of Brain Tumors in MRI Images. In: Crimi, A., Bakas, S. (eds) Brainlesion: Glioma, Multiple Sclerosis, Stroke and Traumatic Brain Injuries. BrainLes 2021. Lecture Notes in Computer Science, vol 12962. Springer, Cham. https://doi.org/10.1007/978-3-031-08999-2_22.

The inventors have tested multiple other machine learning models known in the art that are applicable in the present invention, which are briefly discussed below.

A model referred to as nnU-Net (Isensee, F., Jaeger, P.F., Kohl, S.A.A. et al. nnU-Net: a self-configuring method for deep learning-based biomedical image segmentation. Nat Methods 18, 203-211 (2021). https://doi.org/10.1038/s41592-020-01008-z), is easy to implement, as it automatically adapts to a problem at hand and available in ready libraries.

UNET tested in other embodiments of the invention was implemented according to 3D Unet Çiçek, O., Abdulkadir, A., Lienkamp, S.S., Brox, T., Ronneberger, O. (2016). 3D U-Net: Learning Dense Volumetric Segmentation from Sparse Annotation. In: Ourselin, S., Joskowicz, L., Sabuncu, M., Unal, G., Wells, W. (eds) Medical Image Computing and Computer-Assisted Intervention - MICCAI 2016. MICCAI 2016. Lecture Notes in Computer Science, vol 9901. Springer, Cham. https://doi.org/10.1007/978-3-319-46723-8 49.

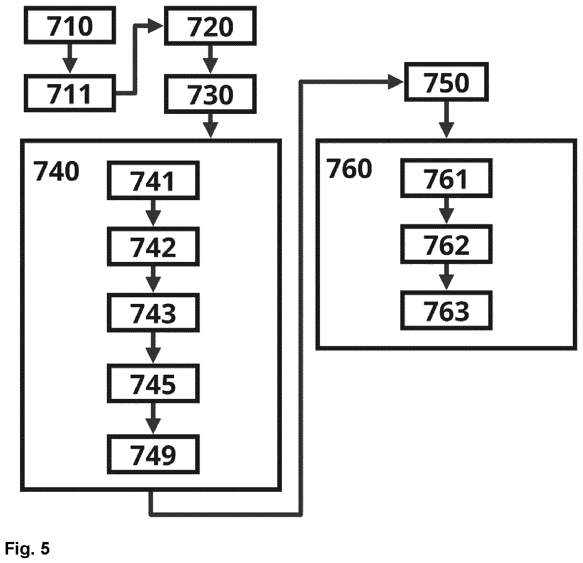

The invention further a method of training of a machine learning model to process a concatenation of at least one MRI sequence and at least one filtered image into a probability map corresponding to at least one brain structure. Flowchart of the method is shown in Fig. 5.

The method comprises a step of receiving **710** MRI images, each comprising a set of sequences.

Further the method comprises a step of retrieving **720** annotations for at least one sequence in each MRI image. The annotation has size equal to the size of the sequence being annotated and contains additional knowledge-representation of the brain structure the trained model is supposed to detect by generating an adequate probability map. Additional annotations may comprise descriptions indicating certain properties of the structures.

Then a step of registering MRI images **730** is executed to obtain MRI images having aligned sequences. When sequences are aligned a step of preparing **740** a set of training data comprising training elements.

In a step of merging annotations **741** to aligned sequences in the MRI images a database is initialized with elements comprising MRI images with annotations corresponding to particular brain structures, especially focal abnormalities.

Synthetic sequences added in the step **742** result in reduction of overfitting. Number and kind of synthetic sequences being added depend on the brain structure that is supposed to be represented in probability map returned by the machine learning model. Examples have been indicated above in discussion of the models applied in particular analysis pipelines above. Similarly feature maps added in the step **743** depend on the brain structure and structures it can be confused with. For example to detect microbleeds which are easily confused with vessels a combination of Hessian-based vesselnes filters with tensor filters are recommended.

Augmentation **745** may involve adding sequences subjected to operations selected from a group comprising translation, rotation, skewing, other rigid or elastic transformations - addition of this data prevents overfitting the model to particular MRI equipment.

Further the augmentation may involve adding sequences obtained with addition of noise, changing colormaps, changing the dynamics and/or intensity of sequences.

Further the augmentation may involve adding synthetic sequences. Thanks to augmenting the training set with synthetic data using generative models it is possible to make machine learning models more robust towards different distributions of MRI images caused by different MRI machine manufacturers, or different MRI settings, or even different sequences. It is especially a needed feature, when two examinations from two different MRI machines are to be analysed.

Another recommended use of synthetic sequence is generation of controlled abnormalities in combination with brain structures that make it difficult to recognize them. Thanks to augmenting data with synthetic focal abnormalities (both large and small) and synthetic vessels it is possible to make a machine learning model more robust towards detecting small focal abnormalities and differentiating them better from vascular objects.

Finally, in the step of normalization **749** training elements are obtained. The normalization is realized in a manner discussed above with reference to step **310** of the method of using the method of detecting the focal abnormalities.

The training element comprises normalized sequences of the MRI images, augmentations thereto and annotations thereto. Sequences with augmentations are in training processed by the machine learning model and annotations are used as a ground truth.

The main training begins with the step of initializing **750** the trained model with noise weights.

The training further comprises a step of processing the training data in training loop **760.**

The sequences and augmentation from the training data element are processed **761** through the model being trained to obtain at least one probability map corresponding to the brain structure. The probability map and annotations from the training element are used to compute cost function in step **762.** There are several applicable cost functions.

Dice-Sorensen loss function is applicable for general segmentation.

Focal loss function enable handling severe class imbalance (e.g., rare object detection).

Tversky loss function is highly suited for imbalanced datasets with emphasis on specific error types.

CLDice loss function is highly suited for tubular structure segmentation (e.g., vessels).

In the step of modifying **763** the model is being trained according to the computed cost function using back-propagation algorithm. It consists of a set of hyperparameters / engineering decisions to choose from. For training algorithm, options include Stochastic Gradient Descent (SGD), SGD with Momentum, or Adam. SGD with momentum has been used in this embodiment. Learning rate (LR) applied can be fixed, decayed, or cyclical. Decayed LR has been used in this embodiment. Weight updates can include standard Momentum to speed up convergence or Nesterov Momentum for improved stability. Nesterov momentum has been used in this embodiment. Regularization techniques like L1/L2 penalize large weights, while Dropout adds robustness by randomly disabling neurons during training. Both have been used in this embodiment. Activation functions include variations of ReLU (Rectified Linear Unit). A leaky ReLU has been used in this embodiment. For missing sequences, a Sparsified training can be used, which either randomly simulates a missing sequence during training, or use a synthetic one. A Sparsified training with synthetic sequences has been used in this embodiment.

The training loop **760** comprising step of processing **761,** step of computing cost function **762** and the step of modifying the model **763** are until reaching a stop condition. The stop condition may be for example a particular invariance in the cost function or extinguishing the whole training data set or particular number of iterations or number of epochs (epoch is a run through the whole training data set).

The training is highly enhances and adapted to particular analysis pipelines applied in inference by use of 3D geometric filters, especially ridge operators and 3D structure tensor type filters selected for particular brain structures. Use of synthetic sequences and multiple sequences in the data set in the training reduces overfitting.

It is recognized that the invention is applicable in a number of brain diseases and injuries. A person skilled in the art is able to provide training data specific for focal abnormalities correlated with aforementioned brain diseases and injuries enabling use of the methods according to the invention therefore. Filed of applications are briefly discussed below.

The described method and system can be used to analyse volumes of brain structures from T1W or FLAIR, detect the "central vein sign" and "hemosiderin rim" from SWI, identify cortical orjuxtacortical lesions from DIR, detect enhancing lesions from T1W+C, identify irreversible white matter damage called "black holes" from T1W, and assess optic nerve inflammation from FLAIR or DIR. Additionally, it aids in differentiating progressive types of Multiple Sclerosis (MS) analysis.

The invention can be used in diagnosis of Alzheimer's disease to perform volumetric assessment, assessment of medial temporal atrophy (MTA) using T1W or FLAIR, measurement of cortical thickness from T1W, identification of ARIA-H (amyloid-related imaging abnormalities with hemorrhage) from SWI, detection of ARIA-E (amyloid-related imaging abnormalities with edema) from FLAIR, evaluation of white matter hyperintensities (WMH) using the Fazekas score from FLAIR, and detection of lacunes from FLAIR and T1W.

The invention can be used to detect aneurysms using TOF or T1W+C sequence, assess rupture risk with TOF or T1W+C, quantify recanalization following embolization using TOF and T1W+C, and track the progression of aneurysms.

The invention is also useful in oncological diagnosis for tumor detection from FLAIR or T1W+C, segmentation of edema, enhancement, and necrosis, identification of bleeding with T1W and T2W sequences diffusion restriction from DWI, detection of hemorrhage from SWI, measurement of tumor size and volumes with longitudinal tracking, and glioma grading.

The described method and system can be used for Traumatic Brain Injury (TBI) analysis to detect acute or subacute hemorrhage using T1W and T2W, identify diffuse axonal injury (DAI) from FLAIR or SWI, and detect epidural or subdural hematomas using T1W, T2W, and FLAIR.

The invention is also applicable for diagnosis of epilepsy as it can be used for detection of cortical dysplasia from FLAIR, identification of cavernomas from SWI, and evaluation of hippocampal sclerosis using T1W, T2W, or FLAIR.

Notably the training scheme described above can be used also to train machine learning model for generation synthetic sequences. It requires use of sequences and probability maps as annotations in training.

The synthetic sequences can be generated from other sequences or from noise.

The described method and system may be implemented as a computer program product that embodies a set of instructions executable by one or more computing devices. The program may be stored on a non-transitory computer-readable medium, such as a hard drive, solid-state drive, optical disk, or other forms of digital storage media, and executed by a processor or a set of processors in a computing environment. Such a computing environment may include, but is not limited to, personal computers, dedicated hardware devices, embedded systems, or server-based infrastructure.

Additionally, the method can be deployed in a cloud computing environment, leveraging the scalability and distributed computing capabilities offered by such platforms. This enables the method to be performed in a highly efficient and redundant manner across multiple nodes or data centers. The distributed nature of the implementation also facilitates integration with Internet of Things (IoT) devices or other interconnected systems, ensuring real-time operation and data analysis.

Furthermore, the invention may be implemented as a Software as a Medical Device (SaMD), adhering to relevant regulatory standards and guidelines. In this capacity, it can function as a standalone diagnostic or therapeutic tool, integrated seamlessly into healthcare workflows.

Alternatively, the method can be executed within an in-house system installed on-premises, ensuring ultimate protection of patient data. This configuration allows organizations to maintain complete control over their data storage and processing, minimizing exposure to external risks and enhancing compliance with stringent data protection regulations. By operating entirely within a secure, localized environment, the system supports high levels of privacy and security, critical for sensitive healthcare applications.

Whether implemented locally on dedicated hardware, deployed on cloud platforms, or distributed across interconnected devices, the method provides a flexible and robust solution adaptable to a variety of technical and operational contexts. Such versatility ensures its applicability to a wide range of use cases in diagnosis of brain diseases and injuries.

**Claims**

1. A computer implemented method of detecting and/or monitoring brain focal abnormalities correlated with a progression of neurological diseases comprising:

   a step of receiving **(120)** at least one MRI image comprising at least one sequence in at least one predefined format
   a step of applying at least a first brain analysis pipeline **(130,131,132),** comprising:

   normalization **(310)** of the at least one MRI image,
   verification **(320)** of the at least one MRI image to determine if it comprises all required sequences,
   feature calculation **(350)** by applying at least one geometric feature filter **(351, 352, 353, 354)** to at least one sequence to obtain at least one feature map
   concatenation **(360)** of the at least one sequence of the normalized MRI image and the at least one feature map to obtain input for the machine learning model
   processing **(370)** of the input with a machine learning model, in encoder-decoder architecture, trained to return probability map corresponding to the at least one brain structure with use of real sequences and synthetic sequences,

   wherein, in the first brain analysis pipeline **(130)** the machine learning model is trained to detect brain structure which is focal abnormality of a first type,
   a step of outputting **(140)** by processing at least one probability map into focal abnormality information.

2. The method according to the claim 1, comprising a step of applying a second brain analysis pipeline **(131)** comprising processing of the input with a machine learning model trained to return a probability map of at least one brain structure other than focal abnormalities, and the step of outputting **(140)** includes merging the result of processing with the first and the second step machine learning model processing **(130).**

3. The method according to the claim 1, wherein the method further comprises a step of applying a third brain analysis pipeline comprising processing of the input with a machine learning model trained to return a probability map of a focal abnormality type other than the first type.

4. The method according to the claim 1 or 2 or 3, wherein at least one synthetic sequence is generated in generation step **(340, 342)** if verification **(320)** step outputs information that at least one required sequence is not present in the MRI image.

5. The method according to the claim 4, wherein the synthetic sequence is generated using a generative machine learning model.

6. The method according to the claim 5, wherein, the generative machine learning model is a diffusion model or autoregressive image generating model.

7. The method according to any one of claims 1 to 6, wherein the input of the processing **(370)** step comprises at least two sequences and the feature calculation step is preceded with registration step (330) in which all sequences are aligned.

8. Computer program product comprising a set of instructions which, when run on a computing environment cause execution of the method according to any of claims 1-7.

9. A computer system comprising a computing environment adapted to execute a method according to any of claims 1-7.

10. A method of training of a machine learning model to process a concatenation of at least one MRI sequence and at least one filtered image into a probability map corresponding to a brain structure, the method comprising

a step of receiving (710) MRI images comprising a predefined set of sequences,
a step of normalization (711) of the MRI images,
a step of retrieving (720) at least one annotation for at least one sequence in each MRI image, wherein the at least one annotation comprises representation of the brain structure,
a step of preparing (740) a set of training data comprising training elements obtained by:

adding annotations (741) to aligned sequences in the MRI images, and setting up database having elements comprising MRI images with annotations,
generating (742) synthetic sequences generated with machine learning model trained therefor,
adding (743) feature maps, corresponding to application of particular feature filters,
augmentation (745) by adding distortions to at least some of sequences,
concatenation (749) sequences, synthetic sequences, feature maps, distorted sequences and annotations to obtain training element

a step of initializing (750) the trained model
a training loop (760) comprising:

a step of processing (761) sequences with augmentation from the training data element through the model being trained,
a step of computing (762) at least one cost function over the probability map returned by the model being trained and the at least one annotation from the same training data element,
a step of modifying (763) the model being trained according to the computed cost function,

wherein the training loop (760) is repeated until reaching a stop condition.

11. The method according to claim 10, wherein the step of receiving comprises generation of artificial synthetic sequences not present in the MRI images.

12. The method according to claim 10 or 11, wherein the augmentation comprises generation of at least one synthetic sequence with at least one distortion selected from a group comprising addition of noise, subjecting sequence to geometric transformation, subjecting sequence to N4 bias field.

13. The method according to any of claims 10 to 12, wherein the brain structure is a focal abnormality correlated to aneurysm or microbleeds and the filter is selected from a group of Hessian-based ridge operators.

14. The method according to any of claims 10 to 13, wherein the machine learning model for generating (742) synthetic sequences is a diffusion model or autoregressive image generating model.

15. The method according to any of claim 10 to 14, wherein the machine learning model for generating (742) synthetic sequences is fed with data selected from a group including: noise, annotations and MRI sequences.

Fig. 1

Fig. 2

## ⁞⁞HETALOX

## Brain lesion longitudinal and atrophy comparison

| | Lesion volume | Lesion count | Periventricular | Deep white | Juxtacortical | Infratentorial |
|---|---|---|---|---|---|---|
| Longitudinal change | -1.25 ml | -16 | -1.05 ml | 0.14 ml | 0.05 ml | -0.39 ml |

Current lesion load of white matter is **0.7 %**

| 0.7 % |
|---|
| 0%                                                100% |

## Lesions visualization

## Lesions in-depth analysis

| | Total | | Periventricular | | Deep white | | Juxtacortical | | Infratentorial | |
|---|---|---|---|---|---|---|---|---|---|---|
| | Now | Prior | Now | Prior | Now | Prior | Now | Prior | Now | Prior |
| Lesion burden [cm³] | 14.60 ↓ | 15.85 | 12.98 ↓ | 14.03 | 0.61 ↑ | 0.46 | 0.87 ↑ | 0.82 | 0.15 ↓ | 0.54 |
| Lesion count | 41 ↓ | 57 | 5 ↓ | 6 | 25 ↓ | 29 | 8 ↓ | 14 | 3 ↓ | 8 |
| Lesion load (% of white matter) | 0.70 ↓ | 0.79 | 0.62 ↓ | 0.7 | 0.03 ↑ | 0.02 | 0.04 ↑ | 0.04 | 0.01 ↓ | 0.03 |

## Lesion dynamics analysis

| | Total count | Total volume [cm³] | Periventricular [cm³] | Deep white [cm³] | Juxtacortical [cm³] | Infratentorial [cm³] |
|---|---|---|---|---|---|---|
| New | 4 | 0.12 | 0 | 0.11 | 0 | 0.01 |
| Enlarging | 15 | 0.78 | 0.06 | 0.12 | 0.6 | 0.01 |
| Shrinking | 22 | 13.7 | 12.92 | 0.38 | 0.27 | 0.13 |
| Stable | 0 | 0 | 0 | 0 | 0 | 0 |

## Brain structure volumes

Values in parentheses and Δ symbol represent a change between now and prior values.

| Brain structure | Volume [cm³] | % ICV | Normative percentile |
|---|---|---|---|
| Whole brain | 3729.97 (Δ = 94.50) | 92.43 (Δ = -0.47) | 83 (Δ = 0) |
| Cortical gray matter | 912.33 (Δ = -24.78) | 22.61 (Δ = -1.34) | 83 (Δ = 0) |
| Cerebral white matter | 2093.86 (Δ = 89.31) | 51.89 (Δ = 0.66) | 83 (Δ = 0) |

## Technical information

| Examination ICV | | Difference | Longitudinal comparison reliability [0-10 scale] |
|---|---|---|---|
| Now [cm³] | Prior [cm³] | | |
| 1123 | 1100 | +2.09% | 10 |

Longitudinal comparison reliability score reflects errors. For example 10 means difference between 0-1%.

Notes about automated quality control (QC):

1. Nothing to report.

## Fig. 3

Fig. 4

Fig. 5

Europäisches Patentamt

European Patent Office

Office européen des brevets

# EUROPEAN SEARCH REPORT

**Application Number**

EP 25 46 1506

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WANG CHING-WEI ET AL: "Stroke Lesion Segmentation of 3D Brain MRI Using Multiple Random Forests and 3D Registration", 19 March 2016 (2016-03-19), SAT 2015 18TH INTERNATIONAL CONFERENCE, AUSTIN, TX, USA, SEPTEMBER 24-27, 2015; [LECTURE NOTES IN COMPUTER SCIENCE; LECT.NOTES COMPUTER], SPRINGER, BERLIN, HEIDELBERG, PAGE(S) 222 - 232, XP047338272, ISBN: 978-3-540-74549-5 [retrieved on 2016-03-19] * abstract * * section 2 * * figures 1, 2, 3, 5, 6 * ----- | 1-15 | INV. G06T7/00 |
| A | YAPICI MUTLU MUHAMMED ET AL: "Improving Brain Tumor Classification with Deep Learning Using Synthetic Data", COMPUTERS, MATERIALS & CONTINUA, vol. 74, no. 3, 28 December 2022 (2022-12-28), pages 5049-5067, XP093274274, * abstract * * section 3.2 * * figure 1 * ----- | 1-15 | |
| A | KHALIL YASMINA AL ET AL: "A Stratified Cascaded Approach for Brain Tumor Segmentation with the Aid of Multi-modal Synthetic Data", 16 September 2022 (2022-09-16), SPRINGER INTERNATIONAL PUBLISHING, PAGE(S) 92 - 101, XP047634348, * abstract * * sections 2.1, 2.3, 3.4 * * figure 2 * ----- -/-- | 1-15 | TECHNICAL FIELDS SEARCHED (IPC) G06T |

The present search report has been drawn up for all claims

| Place of search | Date of completion of the search | Examiner |
|---|---|---|
| Munich | 3 July 2025 | Engels, Angela |

Europäisches
Patentamt
European
Patent Office
Office européen
des brevets

# EUROPEAN SEARCH REPORT

Application Number

EP 25 46 1506

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | OZAN GENC ET AL: "DeepSWI: Using Deep Learning to Enhance Susceptibility Contrast on T2*-Weighted MRI", JOURNAL OF MAGNETIC RESONANCE IMAGING, SOCIETY FOR MAGNETIC RESONANCE IMAGING, OAK BROOK, IL, US, vol. 58, no. 4, 2 February 2023 (2023-02-02), pages 1200-1210, XP072497796, ISSN: 1053-1807, DOI: 10.1002/JMRI.28622 * abstract * * section "Network Architecture" * * figure 2 * | 4,5 | |
| A | RAI HARI MOHAN ET AL: "2D MRI image analysis and brain tumor detection using deep learning CNN model LeU-Net", MULTIMEDIA TOOLS AND APPLICATIONS, KLUWER ACADEMIC PUBLISHERS, BOSTON, US, vol. 80, no. 28-29, 30 October 2021 (2021-10-30), pages 36111-36141, XP037631879, ISSN: 1380-7501, DOI: 10.1007/S11042-021-11504-9 [retrieved on 2021-10-30] * abstract * * section 3.5 * * table 1 * | 12 | TECHNICAL FIELDS SEARCHED (IPC) |

The present search report has been drawn up for all claims

| Place of search | Date of completion of the search | Examiner |
|---|---|---|
| Munich | 3 July 2025 | Engels, Angela |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 3629898 A1
- ES 2813777

- DE 102020200081

### Non-patent literature cited in the description

- **TUSTISON, N.J.** ; **COOK, P.A.** ; **HOLBROOK, A.J. et al.** The ANTsX ecosystem for quantitative biological and medical imaging.. *Sci Rep*, 2021, vol. 11, 9068, https://doi.org/10.1 038/s41598-021-87564-6
- **PÜSPÖKI, Z.** ; **STORATH, M.** ; **SAGE, D.** ; **UNSER, M.** *Transforms and Operators for Directional Bio-image Analysis: A Survey*, 2016
- Focus on Bio-Image Informatics.. Advances in Anatomy, Embryology and Cell Biology. Springer, Cham, vol. 219
- **T. JERMAN** ; **F. PERNUS** ; **B. LIKAR** ; **Z. SPICLIN**. Enhancement of Vascular Structures in 3D and 2D Angiographic Images. *IEEE Transactions on Medical Imaging*, 2016, vol. 35 (9), 2107-2118
- Multiscale vessel enhancement filtering. In: Wells, W.M., Colchester, A., Delp, S. (eds) Medical Image Computing and Computer-Assisted Intervention - MICCAI'98. MICCAI 1998.. **FRANGI, A.F.** ; **NIESSEN, W.J.** ; **VINCKEN, K.L** ; **VIERGEVER, M.A.** Lecture Notes in Computer Science. Springer, 1998, vol. 1496
- **MEIJERING, E.** ; **JACOB, M.** ; **SARRIA, J. C.** ; **STEINER, P.** ; **HIRLING, H.** ; **UNSER, M.** Design and validation of a tool for neurite tracing and analysis in fluorescence microscopy images.. *Cytometry Part A*, 2004, vol. 58 (2), 167-176
- **SATO, Y.** ; **NAKAJIMA, S.** ; **SHIRAGA, N.** ; **ATSUMI, H.** ; **YOSHIDA, S.** ; **KOLLER, T.** ; **KIKINIS, R**. Three-dimensional multi-scale line filter for segmentation and visualization of curvilinear structures in medical images.. *Medical image analysis*, 1998, vol. 2 (2), 143-168

- **PEMBERTON, H.G.** ; **WU, J** ; **KOMMERS, I. et al.** Multi-class glioma segmentation on real-world data with missing MRI sequences: comparison of three deep learning algorithms.. *Sci Rep*, 2023, vol. 13, 18911, https://doi.org/10.1038/s41598-023-44794-0
- Autoregressive image generation using residual quantization. *Proceedings of the IEEE/CVF Conference on Computer Vision and Pattern Recognition.*, 2022
- Swin UNETR: Swin Transformers for Semantic Segmentation of Brain Tumors in MRI Images. **HATAMIZADEH, A.** ; **NATH, V.** ; **TANG, Y.** ; **YANG, D** ; **ROTH, H.R** ; **XU, D.** Brainlesion: Glioma, Multiple Sclerosis, Stroke and Traumatic Brain Injuries. Springer, 2022, vol. 12962
- **ISENSEE, F.** ; **JAEGER, P.F** ; **KOHL, S.A.A. et al.** nnU-Net: a self-configuring method for deep learning-based biomedical image segmentation.. *Nat Methods*, 2021, vol. 18, 203-211, https://doi.org/10.1038/s41592-020-01008-z
- 3D U-Net: Learning Dense Volumetric Segmentation from Sparse Annotation. **UNET ÇIÇEK, O.** ; **ABDULKADIR, A.** ; **LIENKAMP, S.S.** ; **BROX, T.** ; **RONNEBERGER, O.** Medical Image Computing and Computer-Assisted Intervention - MICCAI 2016. MICCAI 2016. Lecture Notes in Computer Science. Springer, 2016, vol. 9901